# EUROPEAN PATENT APPLICATION

(11) **EP 4 201 797 A1**
(43) Date of publication of application: **28.06.2023**
(21) Application number: 21315289.5
(22) Date of filing: 23.12.2021
(51) Int. Cl.: B63B 21/50, B63B 35/44

(54) **SUBSEA CONFIGURATION FOR FLOATING STRUCTURES OF AN OFFSHORE WIND FARM**

(71) Applicant: TotalEnergies OneTech, 92400 Courbevoie (FR)
(72) Inventor: Barrier, Philippe, 92270 Bois-Colombes (FR); Le-Guennec, Stéphane, 78380 Bougival (FR); Roques, Jean-Philippe, 78400 Chatou (FR)
(74) Representative: Croonenbroek, Thomas Jakob

(57) **Abstract**

The present invention relates to an offshore wind farm (1) comprising at least three floating structures (3) designed to receive a wind turbine (4), each floating structure (3) comprising at least three mooring lines (5), each mooring line (5) being attached to a mooring point (51, 52) arranged around said floating structure (3), wherein three adjacent floating structures (3) have at least one of their mooring lines (5) having a common junction point (51) above the seabed (Sb), this common junction point (51) being attached to a submerged buoy (7) moored to the seabed, the other mooring points (52) of the other mooring lines (5) being directly moored to the seabed (Sb), the offshore wind farm (1) also comprises at least one electrical inter-array cable (9) connecting two adjacent floating structures (3), said electrical inter-array cable (9) being configured to float midwater over its entire length between the two adjacent floating structures (3).

## Description

### TECHNICAL FIELD:

The present invention relates to a subsea configuration of floating structures for an offshore wind farm. More precisely, the present invention relates to the subsea configuration for floating structures anchored on the seabed for water depths greater than 400m.

### BACKGROUND:

For depths up to 60m, it is well known to use support structures, like jacket structures, for offshore wind turbines. Such a support structure rests on the seabed and is fixed to the ground with anchor devices. The support structure extends above the sea level to receive a wind turbine mast. Generally, this support structure is made of one piece and the greater the depth is, the higher the support structure must be.

For greater depths for example greater than 60m, the offshore wind turbines are generally not installed on support structures resting on the seabed but are installed on floating structures moored to the seabed with mooring lines.

In offshore wind farm, the spacing between wind turbines is governed by yield constraints, for example due to the wake effects. Thus, two adjacent wind turbines are typically spaced by six to eight times the turbine rotor diameter depending on the considered direction. For example, two adjacent wind turbines aligned in the dominant wind direction may be spaced by eight times the turbine rotor diameter in order to minimize the wake effects and in order that the wind turbine placed behind have a greater productivity. Two adjacent wind turbines not aligned in the dominant wind direction could be closer to each other for example spaced by six times the turbine rotor diameter in order to maximize the density of wind turbines in the offshore wind farm. While going in greater water depths, for example greater than 400m, it is more challenging to maintain such a wind farm layout due to the footprint of the mooring system. In addition to layout constraints, standard mooring configurations in deep waters imply longer mooring lines, which means higher costs. In order to push the development of offshore wind energy in these areas, cheaper solutions need to be developed regarding subsea arrangement in particular for the mooring configuration.

Standard mooring configuration typically requires a minimum pattern of 1.4 x water depth to 1.8 x water depth. In deep waters, these mooring footprints could be accommodated by considering different floating structures orientation between adjacent wind turbines to avoid clashes between mooring lines. However, this would lead to a very complex and congested layout and would require additional engineering effort due to the different floating structures orientations to be studied. In order to reduce costs, a mooring layout based on mutualized anchors (between adjacent mooring lines) is known. However, this solution could not be considered in very deep waters where mooring lines would be crossing before reaching the anchor point.

A solution of mooring configuration based on shared mooring lines have been developed for example with shared anchor points onto the seabed, as describe in document CN210653580 or with shared anchor point onto common floating buoys, as described in document CN111071400. However, these solutions provide very low restoring loads to the floating structures when it moves out from the equilibrium position due to external loads, and then leads to very high offsets. These very high offsets would be problematic for the mooring lines themselves and for other equipment linked to the floating structures like electrical inter-array cables.

One aim of the present invention is to provide an enhanced and cheap mooring configuration for an offshore wind turbine adapted for depths greater than 400m and having a limited footprint.

To this end, the invention relates to an offshore wind farm comprising at least three floating structures designed to receive a wind turbine, each floating structure comprising at least three mooring lines, each mooring line being attached to a mooring point arranged around said floating structure,
wherein three adjacent floating structures have at least one of their mooring lines having a common junction point above the seabed, this common junction point being attached to a submerged buoy moored to the seabed, the other mooring points of the other mooring lines being directly moored to the seabed, the offshore wind farm also comprises at least one electrical inter-array cable connecting two adjacent floating structures, said electrical inter-array cable being configured to float midwater over its entire length between the two adjacent floating structures.

The attachment points of the mooring lines to the submerged buoy may be placed below the submerged buoy.

The submerged buoy may be moored to the seabed with a flexible tether having a limited height with the seabed.

The submerged buoy may be placed at least at 60m above the seabed.

The mooring lines may be made of fiber ropes.

The floating structures may be placed in such a way that the mooring lines form a hexagonal pattern.

The present invention also relates to an offshore wind farm comprising floating structures designed to receive a wind turbine and at least one electrical inter-array cable connecting two adjacent floating structures, wherein said electrical inter-array cable is configured to float midwater over its entire length between the two adjacent floating structures.

The electrical inter-array cables may have at least one wave shape.

The electrical inter-array cables may have a two wave shape.

The inter-array cable may comprise at least one midwater floating element within its structure, said midwater floating element designed to form the crest of the wave shape.

Further features and advantages of the invention will become apparent from the following description, given by way of non-limiting example, with reference to the appended drawings, in which:
- Figure 1 is a side view of a schematic representation of an offshore wind farm of wind turbines with their mooring lines,
- Figure 2 is a top view of a schematic representation of the offshore wind farm of wind turbines of figure 1,
- Figure 3 is a top view of a schematic representation of the offshore wind farm of wind turbines according to a second embodiment,
- Figure 4 is a side view of a schematic representation of an offshore wind farm of wind turbines with an electrical inter-array cable.

In these figures, identical elements bear the same reference numbers. The following implementations are examples. Although the description refers to one or more embodiments, this does not necessarily mean that each reference relates to the same embodiment or that the features apply only to a single embodiment. Individual features of different embodiments can also be combined or interchanged to provide other embodiments.

### SUMMARY OF INVENTION

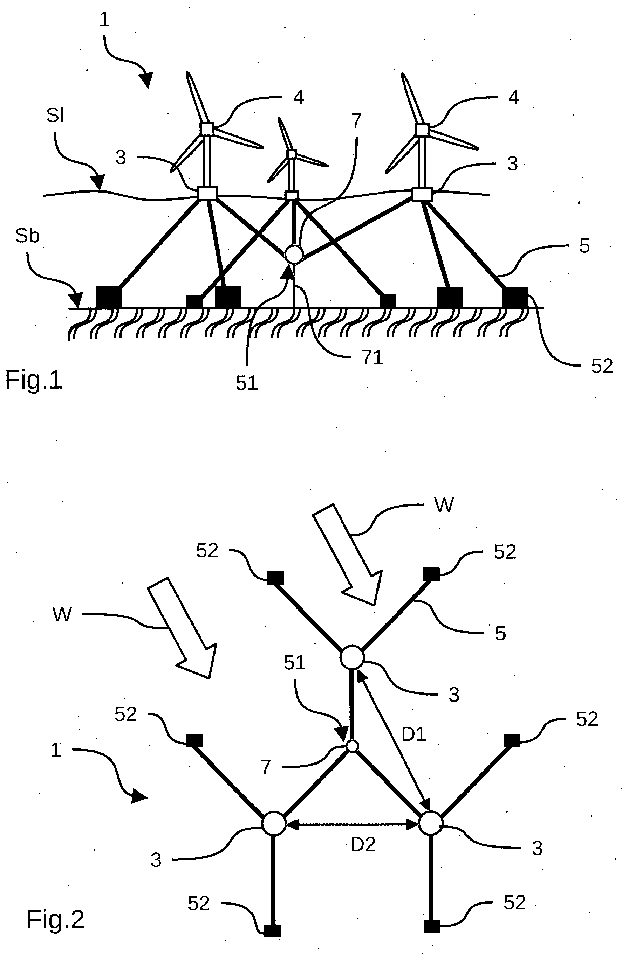

Figure 1 shows an offshore wind farm 1 comprising at least three floating structures 3 designed to each receive a wind turbine 4. Each floating structure 3 comprises at least three mooring lines 5 in order to moor the floating structure 3 to the seabed. Each mooring line 5 is attached to a mooring point 51, 52 arranged around the floating structure 3. The mooring lines 5 may also be arranged around the floating structure 3 in a "Y" shape in order to maintained the floating structure 3 in any direction on the surface of the sea (see figure 2). The length of the mooting lines 5 is dependent on their inclination and the water depth.

The mooring lines 5 may be made of fiber ropes or metallic cables made of metal strands. In particular, these fiber ropes may be made of polymeric fibers such as polyester, nylon or polyolefin like polypropylene or polyethylene.

As shown in figure 1, three adjacent floating structures 3 have at least one of their mooring lines 5 having a common junction point 51 above the seabed Sb. This common junction point 51 is attached to a submerged buoy 7 moored to the seabed Sb. The fact that the adjacent floating structures 3 have a common junction point 51 attached to a submerged buoy 7 allows bringing the adjacent floating structures 3 closer to each other. Thus, as shown in figure 2, the floating structures 3 and the wind turbines 4 could be spaced in an optimum way by, for example, a distance D1 about eight times the turbine rotor diameter for two floating structures 3 aligned in the dominant wind direction W. This distance D1 enables minimizing the wake effects and enables the wind turbine 4 placed behind to have a greater productivity. Two adjacent floating structures 3 not aligned in the dominant wind direction W may be spaced for example by a distance D2 about six times the turbine rotor diameter in order to maximize the density of wind turbines 4 in the offshore wind farm 1.

With these distances D1 and D2 between the floating structures 3, the common junction point 51 may be a point where the mooring lines 5 would have crossed each other. The depth of the submerged buoy 7 may also be determined by the common junction point 51 where the mooring lines 5 would have crossed each other. Thus, the footprint of the offshore wind farm 1 due to its mooring configuration is limited. Only one mooring point is needed with the submerged buoy 7 instead of three moorings points on the seabed. The length of the mooring lines 5 attached to the submerged buoy 7 is also reduced which permits a reduction of the costs. This is particularly advantageous for an offshore wind farm 1 installed in greater water depths, for example greater than 400m.

The submerged buoy 7 is preferably an equipressure buoy. An equipressure buoy allows to reduce the external loads on the buoy once installed at its final depth.

In order to minimize the constraints applied to the submerged buoy the submerged buoy 7, the attachment points of the mooring lines 5 to the submerged buoy 7 may be placed below the submerged buoy 7. Thus, the submerged buoy 7 do not need to be sized up to the minimum breaking load of the mooring lines 5.

Preferably, the submerged buoy 7 is moored to the seabed Sb with a flexible tether 71 having a limited height with the seabed Sb. This flexible tether 71 could be any means known by the skilled person in this domain. For example, the submerged buoy 7 could be moored by at least one cable or chain.

As this mooring configuration is preferably dedicate to water depths greater than 400m, the submerged buoy 7 is preferably placed at least at 60m above the seabed Sb. More specifically, the submerged buoy 7 is preferably placed at a maximum depth of 85% of the water depth. Thus, the flexible tether 71 has a length of at least 15% of the water depth. For example, for a water depth of 600m, the submerged buoy 7 may be placed at least at a depth of 500m with flexible tether 71 of 100m.

As shown in figures 1 and 2, the other mooring lines 5 are directly moored to the seabed Sb. More specifically, the other mooring lines 5 are placed without crossing each other and are moored directly onto the seabed Sb at mooring points 52. These mooring lines 5 could be moored onto the seabed Sb by any means known by the skilled person in this domain. The fact that the other mooring lines 5 are directly moored to the seabed Sb enables limiting the lateral movements of the offshore wind farm 1 in general and more specifically of the array of floating structures 3.

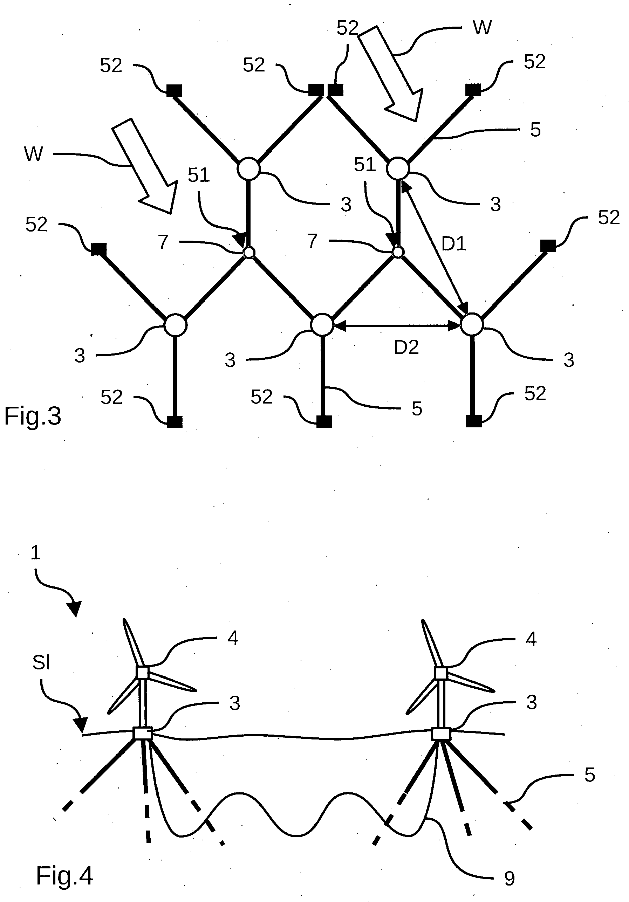

As shown in figures 2 and 3, the inner mooring lines 5 of the offshore wind farm 1 are preferably the ones with a common junction point 51 attached to a submerged buoy 7. More specifically, the inner mooring lines 5 attached to a submerged buoy 7 are the ones where the common junction point 51 is the intersection of three mooring lines 5. The outer mooring lines 5 of the offshore wind farm 1 are the ones directly moored to the seabed Sb.

As shown in figure 3, the floating structures 3 are preferably placed in such a way that the mooring lines 5 form a hexagonal pattern. In the example illustrated in figure 3, a first tip is a floating structure 3, two side points are two junction points 51 linked to the floating structure 3 of the first tip, the junction points being attached to respective submerged buoys 7, two other side points are a floating structure 3 and a second tip is two mooring points 52 onto the seabed Sb. In case of a greater offshore farm 1 with more wind turbines 4 and more floating structures 3, this second tip could also be another common junction point 51 attached to a submerged buoy 7. This hexagonal pattern also enables the floating structures 3 and the wind turbines 4 to be spaced in an optimum way by, for example, a distance D1 about eight times the turbine rotor diameter for two floating structures 3 aligned in the dominant wind direction W. This distance D1 enables minimizing the wake effects and enables the wind turbine 4 placed behind having a greater productivity. Two adjacent floating structures 3 not aligned in the dominant wind direction may be spaced for example by a distance D2 equals to about six times the turbine rotor diameter in order to maximize the density of wind turbines 4 in the offshore wind farm 1.

As shown in figure 4, the offshore wind farm 1 may also comprises at least one electrical inter-array cable 9 connecting two adjacent floating structures 3. This electrical inter-array cable 9 is configured to float midwater over its entire length between two adjacent floating structures 3. This particular electrical inter-array cable 9 is not resting on the seabed Sb which reduces the cost of the offshore wind farm 1 and also limits the mechanical constraints on the electrical inter-array cable 9, especially when the seabed Sb is at a depth of more than 400m. The electrical inter-array cable 9 may float midwater at a depth comprise between 100m to 300m in order to not to be subjected to the effects of the swell and also to limits the mechanical constraints on the electrical inter-array cable 9.

The electrical inter-array cable 9 could have at least one wave shape in order to absorb relative movements and the constraints between the floating structures 3. This wave shape may have an amplitude of a few tens of meters. Preferably, the electrical inter-array cable 9 have a two waves shape to absorb theses movements. Indeed, the further the floating structures 3 are from each other, the more it is necessary to have waves on the electrical inter-array cable 9 in order to absorb the movements and the constraints. The electrical inter-array cable 9 comprises at least one midwater floating element within its structure, for example buoys attached to the cable or elements with a lighter buoyancy. This midwater floating element is designed to form the crest of the wave shape.

By combining the common junction point 51 being attached to a submerged buoy 7 moored to the seabed, of some mooring lines 5 and at least one electrical inter-array cable 9 being configured to float midwater over its entire length between two adjacent floating structures 3, the footprint of the offshore wind farm 1 and the costs are reduced.

## Claims

1. Offshore wind farm (1) comprising at least three floating structures (3) designed to receive a wind turbine (4), each floating structure (3) comprising at least three mooring lines (5), each mooring line (5) being attached to a mooring point (51, 52) arranged around said floating structure (3),
wherein three adjacent floating structures (3) have at least one of their mooring lines (5) having a common junction point (51) above the seabed (Sb), this common junction point (51) being attached to a submerged buoy (7) moored to the seabed, the other mooring points (52) of the other mooring lines (5) being directly moored to the seabed (Sb), the offshore wind farm (1) also comprises at least one electrical inter-array cable (9) connecting two adjacent floating structures (3), said electrical inter-array cable (9) being configured to float midwater over its entire length between the two adjacent floating structures (3).

2. Offshore wind farm (1) according to the previous claim, wherein the attachment points of the mooring lines (5) to the submerged buoy (7) are placed below the submerged buoy (7).

3. Offshore wind farm (1) according to anyone of the previous claims, wherein the submerged buoy (7) is moored to the seabed (Sb) with a flexible tether (71) having a limited height with the seabed (Sb).

4. Offshore wind farm (1) according to anyone of the previous claims, wherein the submerged buoy (7) placed at least at 60m above the seabed (Sb).

5. Offshore wind farm (1) according to anyone of the previous claims, wherein the mooring lines (5) are made of fiber ropes.

6. Offshore wind farm (1) according to anyone of the previous claims, wherein the floating structures (3) are placed in such a way that the mooring lines (5) form a hexagonal pattern.

7. Offshore wind farm (1) comprising floating structures (3) designed to receive a wind turbine (4) and at least one electrical inter-array cable (9) connecting two adjacent floating structures (3), wherein said electrical inter-array cable (9) is configured to float midwater over its entire length between the two adjacent floating structures (3).

8. Offshore wind farm (1) according to anyone of the previous claims, wherein the electrical inter-array cables (9) have at least one wave shape.

9. Offshore wind farm (1) according to anyone of the previous claims, wherein the electrical inter-array cables (9) have a two wave shape.

10. Offshore wind farm (1) according to anyone of claim 7 or 8, wherein the inter-array cable (9) comprises at least one midwater floating element within its structure, said midwater floating element designed to form the crest of the wave shape.
